# EUROPEAN PATENT APPLICATION

(11) **EP 4 753 085 A1**
(43) Date of publication of application: **03.06.2026**
(21) Application number: 25191092.3
(22) Date of filing: 22.07.2025
(51) Int. Cl.: H01R 31/06, B60R 16/037, H02J 7/00, B60R 11/00, H01R 35/02, B60N 3/14

(54) **ADAPTER, CENTER CONSOLE AND VEHICLE**

(30) Priority: 29.11.2024 CN 202411751061
(71) Applicant: Beijing Xiaomi Mobile Software Co., Ltd., Beijing 100085 (CN)
(72) Inventor: XU, Xuefeng, Beijing, 100085 (CN)
(74) Representative: Dehns Germany Partnerschaft mbB

(57) **Abstract**

The present invention relates to an adapter (100), a center console, and a vehicle. The adapter (100) includes a connecting rod (1) and an adapter head (2). The connecting rod (1) is provided with a mounting part (101) and a first conductive part (102). The adapter head (2) is connected to the connecting rod (1), and is provided with a fixing part (201) and a second conductive part (202). The second conductive part (202) is electrically connected to the first conductive part (102). The fixing part (201) is configured to be connected with an external device. The second conductive part (202) is configured to be electrically connected with the external device.

## Description

### TECHNICAL FIELD

The present invention relates to the technical field of connectors and, more particularly, to an adapter, a center console, and a vehicle.

### BACKGROUND

**In the** related art, vehicles are usually equipped with power supply ports (such as USB ports) to supply power to vehicle-mounted devices and the like. In addition, brackets are fixed on the vehicles using suction cups, adhesives, and other methods to secure the vehicle-mounted devices. For a vehicle-mounted devices that not only needs to be fixed on the vehicle but also requires power supply from the vehicle, the bracket and the power supply port are both necessary, which requires a small distance between the bracket and the power supply port to meet requirements of fixation and power supply. Thus, there is an urgent need to design an adapter having both mechanical fixation and power supply functions.

### SUMMARY

The present invention aims to solve one of the technical problems in the related art at least to some extent.

Accordingly, embodiments of the present invention provide an adapter that functions to mechanically fix an external device and to supply power to the external device simultaneously.

An adapter according to the present invention includes a connecting rod and an adapter head. The connecting rod is provided with a mounting part and a first conductive part. The adapter head is connected to the connecting rod and provided with a fixing part and a second conductive part. The second conductive part is electrically connected to the first conductive part, the fixing part is configured to be connected with an external device, and the second conductive part is configured to be electrically connected with the external device.

Optionally, the adapter head is on an axial side of the connecting rod.

Optionally, the adapter head includes a fixing seat and an adapter seat, the fixing seat is connected to the connecting rod, the adapter seat is connected to the fixing seat, the fixing part is on the fixing seat, and the second conductive part is disposed on the adapter seat.

Optionally, the adapter seat is rotatably connected to the fixing seat to adjust a position of the second conductive part.

Optionally, a rotation angle of the adapter seat is less than 360°.

Optionally, the fixing seat is provided with a first limiting portion and a second limiting portion, and the adapter seat is provided with a first stopping portion and a second stopping portion; the adapter seat rotates between a first limit position and a second limit position; when the adapter seat rotates to the first limit position, the first stopping portion stops against the first limiting portion; and when the adapter seat rotates to the second limit position, the second stopping portion stops against the second limiting portion.

Optionally, the rotation angle of the adapter seat ranges from 15° to 345°.

Optionally, the adapter includes an electrical connector, the second conductive part is electrically connected to the first conductive part through the electrical connector, and the electrical connector includes a bendable redundant segment that expands or bends during rotation of the adapter seat.

Optionally, a storage cavity is provided inside the adapter head, and the redundant segment is bendably disposed in the storage cavity.

Optionally, the fixing seat includes a first abutting portion, the adapter seat includes a second abutting portion, the second abutting portion abuts against the first abutting portion along an axial direction of the connecting rod, and an elastic member is provided between the second abutting portion and the first abutting portion.

Optionally, the connecting rod is provided with a first insertion part, the fixing seat is provided with a first insertion hole, and the first insertion part is inserted into and fitted with the first insertion hole.

Optionally, the first insertion hole is a blind hole with an aperture facing the connecting rod, the fixing seat is provided with a first avoidance opening, and the second conductive part is electrically connected to the first conductive part through the first avoidance opening.

Optionally, the fixing seat is provided with a second insertion part, the adapter seat is provided with a second insertion hole, and the second insertion part is inserted into and fitted with the second insertion hole.

Optionally, the second insertion hole is a through-hole, and the fixing part is disposed at the second insertion part.

Optionally, the adapter head further includes a turning member disposed on a side of the adapter seat away from the connecting rod in an axial direction of the connecting rod, and the turning member is connected to the fixing seat and provided with a turning part.

Optionally, the adapter head further includes a clamping member disposed on a side of the turning member away from the connecting rod in the axial direction of the connecting rod; the clamping member is connected to the fixing seat; and the turning member is clamped between the adapter seat and the clamping member in the axial direction of the connecting rod.

Optionally, the adapter head further includes a decorative cover disposed on a side of the clamping member away from the connecting rod in the axial direction of the connecting rod, and the decorative cover is connected to the turning member.

Optionally, the connecting rod is provided with a third conductive part disposed inside the adapter, the third conductive part is electrically connected to the first conductive part, and the second conductive part is electrically connected to the third conductive part.

Optionally, at least one of the first conductive part and the third conductive part is disposed on an outer circumferential side of the connecting rod.

Optionally, the adapter seat includes an adapter shell and a circuit board, a receiving cavity is enclosed between the fixing seat and the adapter shell, the circuit board is disposed in the receiving cavity and connected to the adapter shell, and the second conductive part is electrically connected to the first conductive part through the circuit board.

Optionally, the adapter seat further includes a backplate disposed in the receiving cavity, and the circuit board is connected to the backplate.

Optionally, the second conductive part is electrically connected to the first conductive part through the electrical connector, and the electrical connector includes a bendable redundant segment; the backplate is on a side of the circuit board away from the connecting rod, and the redundant segment is on a side of the backplate away from the circuit board.

Optionally, the circuit board is provided with a second avoidance opening for the electrical connector to pass through, and the backplate is provided with a third avoidance opening for the electrical connector to pass through.

Optionally, a wire clamping portion is provided on the side of the backplate away from the circuit board, and a part of the electrical connector snaps to the wire clamping portion.

Optionally, the mounting part includes external threads on an outer circumferential surface of the connecting rod.

Optionally, the mounting part is disposed between the first conductive part and the adapter head in an axial direction of the connecting rod.

Optionally, the fixing part is a threaded hole.

Optionally, the second conductive part is a plug-in port.

Embodiments of the present invention further provide a center console.

The center console according to embodiments of the present invention includes a mounting bracket and an adapter. The mounting bracket is provided with an insertion hole and a fixed conductive part. The adapter is the adapter according to any one of the above embodiments, the connecting rod is inserted into the insertion hole, and the first conductive part is electrically connected to the fixed conductive part.

Embodiments of the present invention further provide a vehicle.

The vehicle according to embodiments of the present invention includes the adapter according to any one of the above embodiments or the center console according to any one of the above embodiments.

When the adapter according to embodiments of the present invention is in use, the installation and fixation of the adapter is achieved using the mounting part of the connecting rod, and the electrical connection between the adapter and a power source is achieved using the first conductive part of the connecting rod. Then, the external device is connected to the fixing part of the adapter head to achieve mechanical connection between the external device and the adapter, and the external device is electrically connected to the second conductive part of the adapter head to achieve electrical connection between the external device and the adapter. As a result, the adapter may function to mechanically fix the external device and supply power to the external device simultaneously.

### BRIEF DESCRIPTION OF THE DRAWINGS

FIG. 1 is a perspective view of an adapter according to embodiments of the present invention from one viewing angle.
FIG. 2 is a perspective view of the adapter according to embodiments of the present invention from another viewing angle.
FIG. 3 is a top view of the adapter according to embodiments of the present invention.
FIG. 4 is a sectional view taken along A-A of FIG. 3.
FIG. 5 is a sectional view taken along B-B of FIG. 3.
FIG. 6 is an exploded view of the adapter according to embodiments of the present invention.
FIG. 7 is a perspective view of a fixing seat of the adapter according to embodiments of the present invention.
FIG. 8 is a perspective view of an adapter shell of the adapter according to embodiments of the present invention from one viewing angle.
FIG. 9 is a perspective view of the adapter shell of the adapter according to embodiments of the present invention from another viewing angle.
FIG. 10 is a perspective view of a connecting rod of the adapter according to embodiments of the present invention.
FIG. 11 is a perspective view of a circuit board of the adapter according to embodiments of the present invention.
FIG. 12 is a perspective view of a backplate of the adapter according to embodiments of the present invention.
FIG. 13 is a schematic view of a partial structure of the adapter according to embodiments of the present invention.
FIG. 14 is a perspective view of a turning member of the adapter according to embodiments of the present invention.
FIG. 15 is a perspective view of a decorative cover of the adapter according to embodiments of the present invention.

### Reference numerals:

100. adapter;
1. connecting rod; 101. mounting part; 102. first conductive part; 103. third conductive part; 11. first insertion part; 111. perforation; 12. connecting disc; 121. first connecting hole;
2. adapter head; 201. fixing part; 202. second conductive part; 203. storage cavity; 204. receiving cavity; 205. second adhesive; 206. first adhesive; 207. protective sleeve; 208. second screw; 209. first screw; 210. protective pad; 21. fixing seat; 211. first limiting portion; 212. second limiting portion; 213. first abutting portion; 214. second insertion part; 215. first insertion hole; 216. first avoidance opening; 217. fixing disc; 2171. first threaded hole; 22. adapter seat; 221. first stopping portion; 222. second stopping portion; 223. second abutting portion; 224. second insertion hole; 225. second threaded hole; 226. jack; 2201. adapter shell; 23. turning member; 231. snap hole; 24. clamping member; 25. decorative cover; 251. snap; 26. decorative ring; 27. circuit board; 271. second avoidance opening; 272. second connecting hole; 28. backplate; 281. third avoidance opening; 282. cable clamping portion; 283. third connecting hole; 29. elastic member;
3. electrical connector; 31. redundant segment.

### DETAILED DESCRIPTION

Embodiments of the present invention will be described in detail below, and examples of the embodiments are shown in the accompanying drawings. The embodiments described below with reference to the accompanying drawings are exemplary and intended to explain the present invention, and should not be construed as limiting the present invention.

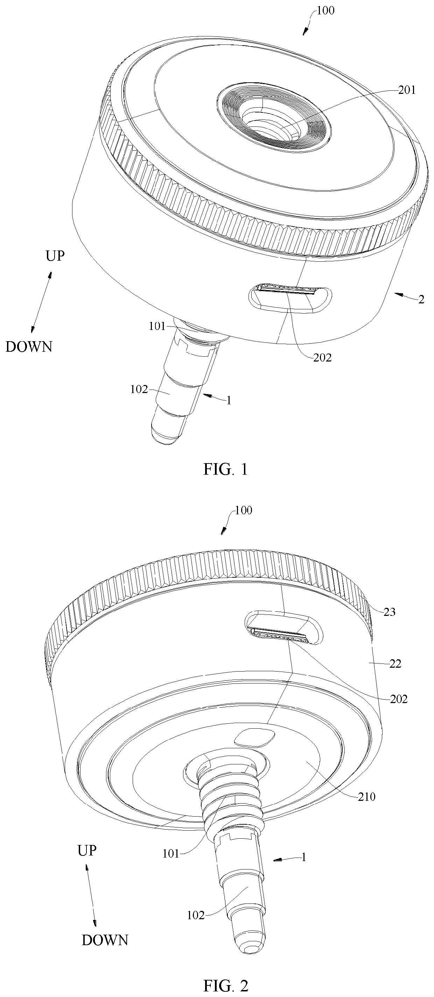

As shown in FIGS. 1 to 6, an adapter 100 according to embodiments of the present invention includes a connecting rod 1 and an adapter head 2 connected to the connecting rod 1. The connecting rod 1 is provided with a mounting part 101 and a first conductive part 102. The adapter head 2 is provided with a fixing part 201 and a second conductive part 202. The second conductive part 202 is electrically connected to the first conductive part 102. The fixing part 201 is configured to be connected with an external device, and the second conductive part 202 is configured to be electrically connected with the external device.

When the adapter 100 according to embodiments of the present invention is in use, the installation and fixation of the adapter 100 is achieved using the mounting part 101 of the connecting rod 1, and the electrical connection between the adapter 100 and a power source is achieved using the first conductive part 102 of the connecting rod 1. For example, the mounting part of the connecting rod 1 is in threaded fit with a threaded hole of a vehicle, and the first conductive part 102 of the connecting rod 1 is electrically connected to the vehicle's power source. Then, the external device is connected to the fixing part 201 of the adapter head 2 to achieve mechanical connection between the external device and the adapter 100, and the external device is electrically connected to the second conductive part 202 of the adapter head 2 to achieve electrical connection between the external device and the adapter 100. As a result, the adapter 100 may function to mechanically fix the external device and supply power to the external device simultaneously.

The external device may be a mobile phone, a camera, etc. In specific use, the fixing part 201 and the second conductive part 202 may be used simultaneously; or the fixing part 201 alone or the second conductive part 202 alone may be used. When only the fixing part 201 is used, the adapter 100 only functions to support and fix the external device; when only the second conductive part 202 is used, the adapter 100 only functions to supply power to the external device.

In some embodiments, as shown in FIGS. 1, 2, 4, 5, and 10, the mounting part 101 is configured as external threads provided on an outer circumferential surface of the connecting rod 1.

By configuring the mounting part 101 as the external threads, the connecting rod 1 may be inserted into an insertion hole, and by turning the connecting rod 1 to connect the external threads with threads of the insertion hole, the installation and fixation of the adapter 100 may be realized, which facilitates the installation and fixation of the adapter 100.

Optionally, the mounting part 101 is disposed between the first conductive part 102 and the adapter head 2 in an axial direction of the connecting rod 1.

By disposing the mounting part 101 between the first conductive part 102 and the adapter head 2 in the axial direction of the connecting rod 1, during the installation and fixation of the adapter 100, the first conductive part 102 is first inserted into the insertion hole, and then the mounting part 101 is threadedly connected with the insertion hole, so that the first conductive part 102 is located inside the insertion hole, avoiding the first conductive part 102 from being exposed to the outside and improving the safety of the adapter 100.

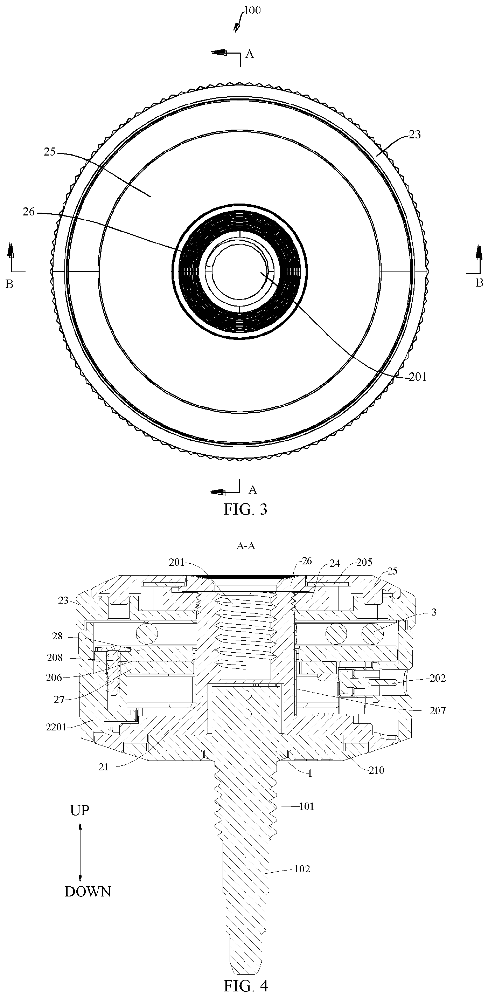

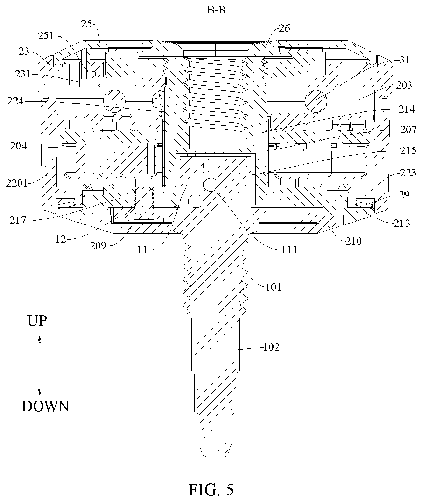

In some embodiments, as shown in FIGS. 4 and 5, the fixing part 201 is a threaded hole.

For example, the fixing part 201 is a standard 1/4-20 UNC threaded hole.

By configuring the fixing part 201 as the threaded hole, the external device and the fixing part 201 of the adapter head 2 are in threaded connection, which not only improves the reliability of the connection between the external device and the adapter 100, but also facilitates the connection and disassembly between the external device and the adapter 100.

Certainly, in other embodiments, the fixing part 201 may also be configured as other structures. For example, the fixing part 201 is provided with a claw that clamps the external device to achieve the connection between the external device and the fixing part 201. Alternatively, the fixing part 201 may be configured as a magnetic member, and the magnetic member magnetically attracts the external device to establish the connection between the external device and the fixing part 201.

In some embodiments, as shown in FIGS. 4 and 5, the second conductive part 202 may be a plug-in port.

For example, the second conductive part 202 is a USB-A port or a USB-C port.

By configuring the second conductive part 202 as the plug-in port, electrical connection and disconnection between the external device and the second conductive part 202 of the adapter head 2 may be achieved by plugging and unplugging, which facilitates the connection and disassembly between the external device and the adapter 100.

Certainly, in other embodiments, the second conductive part 202 may also be a conductive block or a conductive probe. In this case, the external device is in contact with the second conductive part 202 to achieve the electrical connection between the external device and the adapter 100.

In some embodiments, as shown in FIGS. 4 and 5, the adapter head 2 is on an axial side of the connecting rod 1.

For example, the axial direction of the connecting rod 1 is consistent with a vertical direction, and the adapter head 2 is on an upper side of the connecting rod 1.

By disposing the adapter head 2 on the axial side of the connecting rod 1, in the axial side of the connecting rod 1, one side provided with the connecting rod 1 is configured to achieve the installation and fixation of the adapter 100, and the other side provided with the adapter head 2 is configured to be connected with the external device, which may not only facilitate the installation and fixation of the adapter 100, but also facilitate the connection between the external device and the adapter 100.

In some embodiments, as shown in FIGS. 2, 4, 5, and 6, the adapter head 2 includes a fixing seat 21 and an adapter seat 22. The fixing seat 21 is connected to the connecting rod 1, and the adapter seat 22 is connected to the fixing seat 21. The fixing part 201 is disposed on the fixing seat 21, and the second conductive part 202 is disposed on the adapter seat 22.

It may be understood that the fixing part 201 usually requires sufficient structural strength to achieve mechanical connection, while the second conductive part 202 usually requires good insulation performance of surrounding components to achieve electrical connection.

By disposing the fixing part 201 on the fixing seat 21 and disposing the second conductive part 202 on the adapter seat 22, the fixing seat 21 and the adapter seat 22 may be designed and manufactured according to the requirements of the fixing part 201 and the second conductive part 202, respectively, which facilitates the design and manufacturing of the adapter head 2 and thus the design and manufacturing of the adapter 100.

Optionally, as shown in FIGS. 5, 7, and 10, the connecting rod 1 includes a connecting disc 12, and the fixing seat 21 includes a fixing disc 217. The fixing disc 217 is located on one side of the connecting disc 12 in the axial direction of the connecting rod 1, and the connecting disc 12 and the fixing disc 217 are connected.

For example, as shown in FIGS. 5, 7, and 10, the connecting disc 12 is provided with a first connecting hole 121, the fixing disc 217 is provided with a first threaded hole 2171, and a first screw 209 passes through the first connecting hole 121 and is threadedly connected with the first threaded hole 2171. The first screw 209 may be a countersunk screw.

The connecting rod 1 and the fixing seat 21 are configured as described above to facilitate the connection and fixation between the fixing seat 21 and the connecting rod 1.

Optionally, the adapter seat 22 is rotatably connected to the fixing seat 21 to adjust a position of the second conductive part 202.

For example, the adapter seat 22 rotates around an axis of the connecting rod 1, and the second conductive part 202 is disposed on an outer circumferential side of the adapter seat 22. By rotating the adapter seat 22, the position and orientation of the second conductive part 202 may be adjusted in a circumferential direction of the connecting rod 1.

By rotatably connecting the adapter seat 22 to the fixing seat 21, it is convenient for a user to adjust the position of the second conductive part 202 as needed, thereby improving user experience of the adapter 100.

Certainly, in other embodiments, the adapter seat 22 and the fixing seat 21 may also be fixedly connected, that is, the adapter seat 22 and the fixing seat 21 cannot rotate relative to each other.

Optionally, a rotation angle of the adapter seat 22 is less than 360°.

It may be understood that the second conductive part 202 returns to its initial position when the adapter seat 22 rotates by one turn. Thus, the rotation angle of the adapter seat 22 may be set to be less than 360°.

By setting the rotation angle of the adapter seat 22 to be less than 360°, the rotation angle of the adapter seat 22 is prevented from being too large in a case of satisfying the user's requirements for different positions of the second conductive part 202, which facilitates the design and manufacturing of the adapter head 2.

Optionally, the rotation angle of the adapter seat 22 ranges from 15° to 345°.

For example, the rotation angle of the adapter seat 22 is 330°.

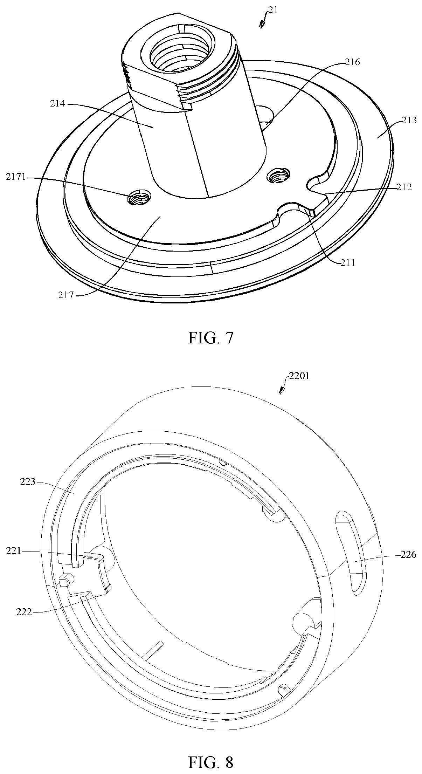

In some embodiments, as shown in FIGS. 7 and 8, the fixing seat 21 is provided with a first limiting portion 211 and a second limiting portion 212, and the adapter seat 22 is provided with a first stopping portion 221 and a second stopping portion 222. The adapter seat 22 rotates between a first limit position and a second limit position. When the adapter seat 22 rotates to the first limit position, the first stopping portion 221 stops against the first limiting portion 211. When the adapter seat 22 rotates to the second limit position, the second stopping portion 222 stops against the second limiting portion 212.

When the adapter seat 22 rotates to the first limit position, the first stopping portion 221 is used to stop against the first limiting portion 211; when the adapter seat 22 rotates to the second limit position, the second stopping portion 222 is used to stop against the second limiting portion 212. In such a way, the adapter seat 22 may be limited to rotation between the first limit position and the second limit position, facilitating limitation on the rotation angle of the adapter seat 22.

Optionally, as shown in FIG. 7, the fixing seat 21 is provided with a limiting protrusion. In a circumferential direction of the fixing seat 21, the first limiting portion 211 and the second limiting portion 212 are formed on two opposite sides of the limiting protrusion, respectively.

Optionally, as shown in FIG. 8, the adapter seat 22 is provided with a stopping protrusion. In a circumferential direction of the adapter seat 22, the first stopping portion 221 and the second stopping portion 222 are formed at two opposite ends of the stopping protrusion, respectively.

In some embodiments, as shown in FIG. 5, the fixing seat 21 includes a first abutting portion 213, and the adapter seat 22 includes a second abutting portion 223. The second abutting portion 223 abuts against the first abutting portion 213 along the axial direction of the connecting rod 1. An elastic member 29 is provided between the second abutting portion 223 and the first abutting portion 213.

It may be understood that a gap between the adapter seat 22 and the fixing seat 21 directly affects a frictional force between the adapter seat 22 and the fixing seat 21. During assembly of the fixing seat 21 and the adapter seat 22, it is difficult to maintain the gap between the fixing seat 21 and the adapter seat 22 within a preset range, so that the frictional force between the adapter seat 22 and the fixing seat 21 is difficult to meet a design range.

By providing the elastic member 29 between the second abutting portion 223 and the first abutting portion 213, and utilizing elastic deformation of the elastic member 29, a size of a gap between the second abutting portion 223 and the first abutting portion 213 may be adjusted, so that the gap between the adapter seat 22 and the fixing seat 21 may meet design requirements, and the frictional force between the adapter seat 22 and the fixing seat 21 may meet design requirements, thereby improving the reliability of the adapter 100.

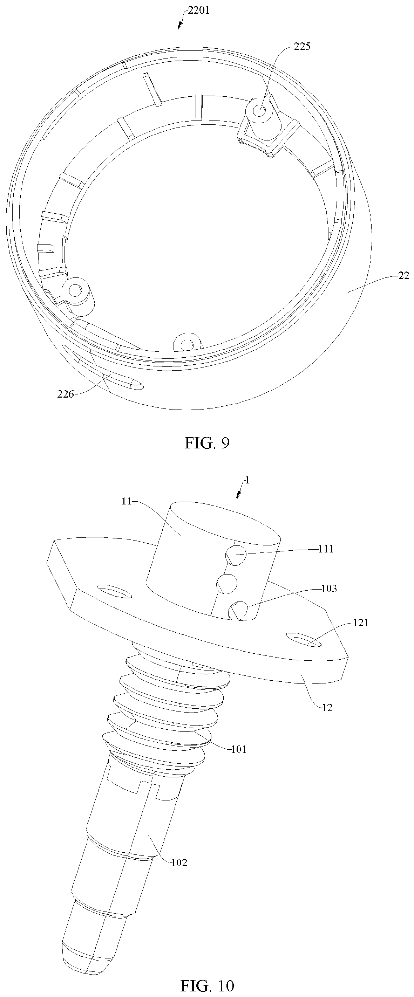

Optionally, as shown in FIGS. 8 and 9, the adapter seat 22 includes an adapter shell 2201, and the adapter shell 2201 is provided with a jack 226. The second conductive part 202 is disposed inside the adapter shell 2201 and corresponds to the jack 226. The jack 226 is used for the external device to be inserted and is electrically connected to the second conductive part 202.

The adapter shell 2201 is an insulating shell. By disposing the second conductive part 202 inside the adapter shell 2201, it is convenient to achieve insulation between the second conductive part 202 and other components, thereby improving the safety of the adapter 100.

In some embodiments, as shown in FIGS. 5 and 10, the connecting rod 1 is provided with a first insertion part 11, and the fixing seat 21 is provided with a first insertion hole 215. The first insertion part 11 is inserted into and fitted with the first insertion hole 215.

Since the first insertion part 11 is inserted into and fitted with the first insertion hole 215, it is convenient to achieve positioning between the fixing seat 21 and the connecting rod 1, thereby facilitating the connection between the fixing seat 21 and the connecting rod 1. Thus, it is convenient to assemble the adapter 100, which is beneficial for reducing costs of the adapter 100.

As shown in FIGS. 4 to 6, the adapter 100 includes an electrical connector 3, and the second conductive part 202 is electrically connected to the first conductive part 102 through the electrical connector 3. That is, two ends of electrical connector 3 are electrically connected to the first conductive part 102 and the second conductive part 202, respectively.

By providing the electrical connector 3, it is convenient to achieve the electrical connection between the second conductive part 202 and the first conductive part 102.

Optionally, as shown in FIG. 5, the first insertion hole 215 is a blind hole with its aperture facing the connecting rod 1. As shown in FIG. 7, the fixing seat 21 is provided with a first avoidance opening 216, and the second conductive part 202 is electrically connected to the first conductive part 102 through the first avoidance opening 216.

For example, the aperture of the first insertion hole 215 faces downwards, the first avoidance opening 216 is a through-hole extending in an up-down direction, and one end of the electrical connector 3 passes through the first avoidance opening 216 and is electrically connected to the second conductive part 202.

In some embodiments, as shown in FIGS. 5, 7, and 8, the fixing seat 21 is provided with a second insertion part 214, the adapter seat 22 is provided with a second insertion hole 224, and the second insertion part 214 is inserted into and fitted with the second insertion hole 224.

By the insertion fit between the second insertion part 214 and the second insertion hole 224, it is convenient to achieve positioning between the fixing seat 21 and the adapter seat 22, thereby facilitating the connection between the fixing seat 21 and the adapter seat 22. Thus, it is convenient to assemble the adapter 100, which is beneficial for reducing costs of the adapter 100.

Optionally, the second insertion hole 224 is a through-hole, and the fixing part 201 is disposed on the second insertion part 214.

By configuring the second insertion hole 224 as the through-hole, the second insertion hole 224 may be configured to avoid the fixing part 201, facilitating the connection between the external device and the fixing part 201.

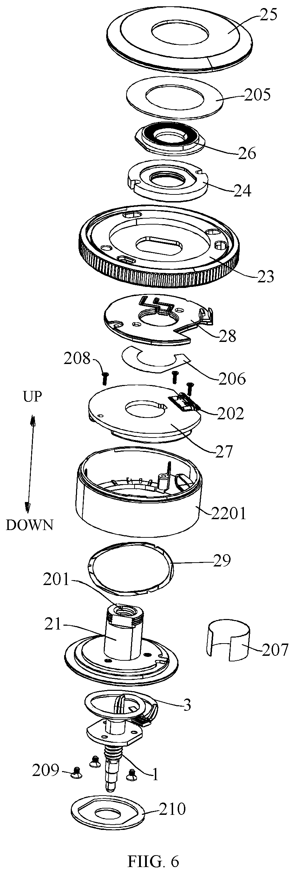

Optionally, as shown in FIGS. 5 and 6, a protective sleeve 207 is provided between the second insertion part 214 and a hole wall of the second insertion hole 224.

The protective sleeve 207 may be made of wear-resistant materials such as plastic.

By providing the protective sleeve 207 between the second insertion part 214 and the hole wall of the second insertion hole 224, the wear caused by friction between the adapter seat 22 and the fixing seat 21 may be reduced, which is beneficial for improving the reliability of the adapter 100.

Optionally, as shown in FIG. 10, the connecting rod 1 is provided with a third conductive part 103, which is located inside the adapter head 2. The third conductive part 103 is electrically connected to the first conductive part 102, and the second conductive part 202 is electrically connected to the third conductive part 103.

By providing the third conductive part 103, the third conductive part 103 is electrically connected to the first conductive part 102, and the second conductive part 202 is electrically connected to the third conductive part 103, so that a distance between the second conductive part 202 and the third conductive part 103 is relatively short, facilitating the electrical connection between the second conductive part 202 and the third conductive part 103. In addition, the arrangement of the third conductive part 103 inside the adapter head 2 facilitates insulation between the third conductive part 103 and other components.

Optionally, as shown in FIG. 10, at least one of the first conductive part 102 and the third conductive part 103 is disposed on an outer circumferential side of the connecting rod 1.

For example, a crown spring is fitted over the outer circumferential side of the connecting rod 1 and forms the first conductive part 102.

For example, as shown in FIG. 10, a lead wire is provided inside the connecting rod 1, and the connecting rod 1 is provided with a perforation 111 extending along a radial direction of the connecting rod 1. One end of the lead wire is led out through the perforation 111 and forms the third conductive part 103.

By providing the first conductive part 102 on the outer circumferential side of the connecting rod 1, it is convenient to achieve electrical connection between the adapter 100 and the power source. By providing the third conductive part 103 on the outer circumferential side of the connecting rod 1, it is convenient to achieve electrical connection between the third conductive part 103 and the second conductive part 202.

Certainly, in other embodiments, at least one of the first conductive part 102 and the third conductive part 103 may also be provided at an end of the connecting rod 1. For example, the first conductive part 102 and the third conductive part 103 are disposed at two axial ends of the connecting rod 1, respectively.

In some embodiments, the electrical connector 3 includes a bendable redundant segment 31 that expands or bends during rotation of the adapter seat 22.

For example, the electrical connector 3 is a flexible wire. When the rotation angle of the adapter seat 22 increases, the redundant segment 31 expands; and when the rotation angle of the adapter seat 22 is reduced, the redundant segment 31 bends and winds up.

Since the electrical connector 3 includes the bendable redundant segment 31, the redundant segment 31 ensures the electrical connection between the third conductive part 103 and the second conductive part 202 by expanding or bending during the rotation of the adapter seat 22.

In other embodiments, the third conductive part 103 and the second conductive part 202 may also be electrically connected through a conductive slip ring.

Optionally, as shown in FIG. 5, the adapter head 2 includes a storage cavity 203 therein, and the redundant segment 31 is bendably provided in the storage cavity 203.

By providing the redundant segment 31 in the storage cavity, the redundant segment 31 may be prevented from interfering with other components, which may otherwise cause the redundant segment 31 to fail to expand or bend, thereby improving the reliability of the adapter 100.

In some embodiments, as shown in FIGS. 4 to 6, the adapter seat 22 includes the adapter shell 2201 and a circuit board 27. A receiving cavity 204 is enclosed between the fixing seat 21 and the adapter shell 2201, and the circuit board 27 is disposed in the receiving cavity 204 and connected to the adapter shell 2201. The second conductive part 202 is electrically connected to the first conductive part 102 through the circuit board 27.

For example, the adapter shell 2201 is annular, and the fixing seat 21 is located inside the adapter shell 2201. The receiving cavity 204 is enclosed between an outer side of the fixing seat 21 and an inner side of the adapter shell 2201.

By providing the circuit board 27, the power source may be rectified and transformed by the circuit board 27, thereby improving the versatility of the adapter 100.

Certainly, in other embodiments, the second conductive part 202 may also be directly electrically connected to the first conductive part 102 through a conductive member. In such a case, a voltage and a current at the second conductive part 202 are equal to a voltage and a current at the first conductive part 102, respectively.

In some embodiments, as shown in FIGS. 4 to 6, the adapter seat 22 further includes a backplate 28 disposed inside the receiving cavity 204, and the circuit board 27 is connected to the backplate 28.

By providing the backplate 28, it is convenient to mount and fix the circuit board 27.

Optionally, as shown in FIGS. 4 to 6, the circuit board 27 and the backplate 28 are bonded together by a first adhesive 206.

The first adhesive 206 may be a double-sided tape.

Optionally, as shown in FIGS. 4 to 6, the circuit board 27, the backplate 28, and the adapter shell 2201 are connected together by a second screw 208.

Optionally, both the circuit board 27 and the backplate 28 are provided with through-holes for the second insertion part 214 to pass through.

For example, as shown in FIGS. 9, 11, and 12, the adapter shell 2201 is provided with a second threaded hole 225, the circuit board 27 is provided with a second connecting hole 272, the backplate 28 is provided with a third connecting hole 283, and the second screw 208 passes through the third connecting hole 283 and the second connecting hole 272 and is threadedly connected with the second threaded hole 225.

During connection of the circuit board 27, the backplate 28, and the adapter shell 2201, the circuit board 27 and the backplate 28 may be first bonded by the first adhesive 206, and then the second screw 208 passes through the third connecting hole 283 and the second connecting hole 272 and is threadedly connected with the second threaded hole 225.

In some embodiments, as shown in FIGS. 4 to 6, the backplate 28 is located on a side of the circuit board 27 away from the connecting rod 1, and the redundant segment 31 is located on a side of the backplate 28 away from the circuit board 27.

For example, the circuit board 27 is located on a lower side of backplate 28, and the redundant segment 31 is located on an upper side of backplate 28.

By disposing the redundant segment 31 on the side of backplate 28 away from the circuit board 27, interference between the redundant segment 31 and electronic elements on the circuit board 27 may be avoided, thereby improving the reliability of the adapter 100.

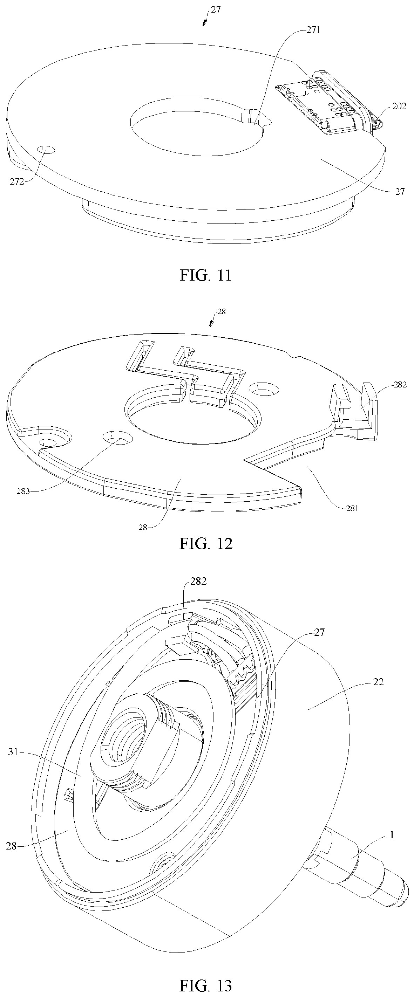

In some embodiments, as shown in FIGS. 12 and 13, a wire clamping portion 282 is provided on the side of the backplate 28 away from the circuit board 27, and a part of the electrical connector 3 snaps to the wire clamping portion 282.

The wire clamping portion 282 may be a clamping groove.

By providing the wire clamping portion 282, the redundant segment 31 may be positioned to expand or bend according to a predetermined path, further improving the reliability of the adapter 100.

In some embodiments, as shown in FIGS. 11 to 13, the circuit board 27 is provided with a second avoidance opening 271 for the electrical connector 3 to pass through, and the backplate 28 is provided with a third avoidance opening 281 for the electrical connector 3 to pass through.

By providing the second avoidance opening 271 in the circuit board 27 and providing the third avoidance opening 281 in the backplate 28, it is convenient for the electrical connector 3 to pass through the circuit board 27 and the backplate 28, facilitating the connection and fixation of the electrical connector 3.

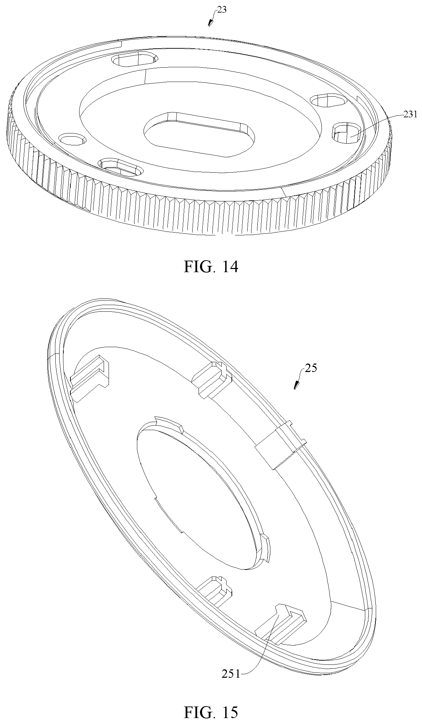

In some embodiments, as shown in FIGS. 4 to 6 and FIG. 14, the adapter head 2 further includes a turning member 23 disposed on a side of the adapter seat 22 away from the connecting rod 1 in the axial direction of the connecting rod 1. The turning member 23 is connected to the fixing seat 21, and the turning member 23 is provided with a turning part. The storage cavity 203 is enclosed among the backplate 28, the adapter shell 2201, and the turning member 23.

For example, as shown in FIGS. 4 to 6, the turning member 23 is disposed on an upper side of the adapter seat 22 and exhibits an annular shape, and an inner hole of the turning member 23 is used to avoid the fixing part 201.

By providing the turning member 23, the installation and fixation of the adapter 100 may be achieved by rotating the adapter 100 through the turning part, so that the mounting part 101 of the connecting rod 1 may be rotated to realize fixation, thereby facilitating the installation and fixation of the adapter 100.

The turning part may be a recess, a protrusion, or a textured structure.

In some embodiments, as shown in FIGS. 4 to 6, the adapter head 2 further includes a clamping member 24 disposed on a side of the turning member 23 away from the connecting rod 1 in the axial direction of the connecting rod 1, and the clamping member 24 is connected to the fixing seat 21. The turning member 23 is clamped between the adapter seat 22 and the clamping member 24 in the axial direction of the connecting rod 1.

For example, as shown in FIGS. 4 to 6, the clamping member 24 is located on an upper side of the turning member 23, and the turning member 23 is clamped between the adapter seat 22 and the clamping member 24. The clamping member 24 exhibits an annular shape, and an inner hole of the clamping member 24 is used to avoid the fixing part 201.

By providing the clamping member 24, it is convenient to connect and fix the turning member 23 to the fixing seat 21, thereby facilitating the assembly of the adapter 100.

Optionally, the clamping member 24 is threadedly connected with the fixing seat 21. For example, an outer surface of the second insertion part 214 is provided with first threads, and a hole wall of the clamping member 24 is provided with second threads, which are connected to the first threads.

In some embodiments, as shown in FIGS. 4 to 6 and FIG. 15, the adapter head 2 further includes a decorative cover 25 disposed on a side of the clamping member 24 away from the connecting rod 1 in the axial direction of the connecting rod 1, and the decorative cover 25 is connected to the turning member 23.

For example, as shown in FIGS. 4 to 6, the decorative cover 25 is disposed on an upper side of the clamping member 24, the decorative cover 25 exhibits an annular shape, and an inner hole of the decorative cover 25 is used to avoid the fixing part 201.

By providing the decorative cover 25, the aesthetic appearance of the adapter 100 may be improved.

Optionally, the decorative cover 25 is engaged with the turning member 23.

For example, as shown in FIGS. 5, 14, and 15, the turning member 23 is provided with a snap hole 231, and the decorative cover 25 is provided with a snap 251, which is snap-fitted in the snap hole 231.

Optionally, as shown in FIGS. 4 to 6, the clamping member 24 and the decorative cover 25 are bonded together by a second adhesive 205.

The second adhesive 205 may be a double-sided tape.

Optionally, as shown in FIGS. 4 to 6, the adapter head 2 further includes a decorative ring 26, which is bonded to the second insertion part 214.

The decorative ring 26 is a metal decorative ring, and an inner hole of the decorative ring 26 is disposed corresponding to the fixing part 201 to avoid the fixing part 201.

Optionally, as shown in FIGS. 4 to 6, the adapter head 2 further includes a protective pad 210, which is disposed on a side of the connecting disc 12 facing the mounting part 101, and is bonded to the connecting disc 12.

The protective pad 210 may be a rubber pad.

By providing the protective pad 210, a side of the fixing seat 21 facing the connecting rod 1 may be protected, improving the reliability of the adapter 100.

The adapter 100 according to embodiments of the present invention has good safety, great universality, easy installation, and aesthetic appearance. In addition, a rotary electrical connection may be achieved at a lower cost.

A center console according to embodiments of the present invention includes a mounting bracket and an adapter 100 that is the adapter 100 described in any one of the above embodiments. The mounting bracket is provided with an insertion hole and a fixed conductive part. The connecting rod 1 is inserted into the insertion hole, and the first conductive part 102 is electrically connected to the fixed conductive part.

Optionally, a hole wall of the insertion hole is provided with internal threads, the mounting part 101 includes external threads on the outer circumferential surface of the connecting rod 1, the external threads are in threaded fit with the internal threads to achieve the connection between the mounting part 101 and the mounting bracket.

By threadedly connecting the mounting part 101 with the mounting bracket, the connection and disassembly between the adapter 100 and the mounting bracket may be facilitated.

A vehicle according to embodiments of the present invention includes the adapter 100 described in any one of the above embodiments or the center console described in any one of the above embodiments. The vehicle may be a pure electric vehicle or a hybrid vehicle.

Positions on the vehicle that need to be connected to external devices may be provided with insertion holes and fixed conductive parts. The connecting rod 1 is inserted into the insertion hole, and the first conductive part 102 is electrically connected to the fixed conductive part.

In the specification, it is to be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientations or positions as then described or as shown in the drawings under discussion. These relative terms are for convenience and simplicity of description and do not indicate or imply that the device or element referred to must have a particular orientation or be constructed and operated in a particular orientation, and hence shall not be construed as limitation on the present invention.

In addition, terms such as "first" and "second" are used herein for purposes of description and are not intended to indicate or imply relative importance or significance or to imply the number of indicated technical features. Thus, the feature defined with "first" and "second" may include one or more of such features. In the description of the present invention, the term "a plurality of" means at least two, such as two or three, unless specified otherwise.

In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also communicate with each other; may also be direct connections or indirect connections via intervening structures; may also be inner connection or mutual interaction of two elements, which can be understood by those skilled in the art according to specific situations.

In the present invention, unless specified or limited otherwise, a structure in which a first feature is "on" or "under" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "above," "over," or "on top of" a second feature may be that the first feature is right or obliquely above the second feature, or merely means that the first feature is at a height higher than that of the second feature; while a first feature "below," "underneath," or "on bottom of" a second feature may be that the first feature is right or obliquely below the second feature, or merely means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present invention. Thus, the appearances of the phrases in various places throughout this specification are not necessarily referring to the same embodiment or example of the present invention. Furthermore, the particular features, structures, materials, or characteristics may be combined in any suitable manner in one or more embodiments or examples. Moreover, different embodiments or examples as well as features in different embodiments or examples described in this specification may be combined and united by those skilled in the art in case of no mutual contradiction.

Although embodiments of the present invention have been shown and described, it would be appreciated by those skilled in the art that the above embodiments are exemplary and cannot be construed to limit the present invention, and changes, modifications, alternatives and variations may be made in the embodiments within the scope of the present invention as defined by the claims.

## Claims

1. An adapter (100), comprising:
a connecting rod (1) provided with a mounting part (101) and a first conductive part (102); and
an adapter head (2) connected to the connecting rod (1) and provided with a fixing part (201) and a second conductive part (202), wherein the second conductive part (202) is electrically connected to the first conductive part (102), the fixing part (201) is configured to be connected with an external device, and the second conductive part (202) is configured to be electrically connected with the external device.

2. The adapter (100) according to claim 1, wherein the adapter head (2) is on an axial side of the connecting rod (1);
and optionally, wherein the mounting part (101) is disposed between the first conductive part (102) and the adapter head (2) in an axial direction of the connecting rod (1); and
further optionally, wherein the mounting part (101) comprises external threads on an outer circumferential surface of the connecting rod (1).

3. The adapter (100) according to claim 2, wherein the adapter head (2) comprises a fixing seat (21) and an adapter seat (22), the fixing seat (21) is connected to the connecting rod (1), the adapter seat (22) is connected to the fixing seat (21), the fixing part (201) is on the fixing seat (21), and the second conductive part (202) is disposed on the adapter seat (22);
and optionally, wherein the fixing part (201) is a threaded hole; and
and further optionally, wherein the second conductive part (202) is a plug-in port.

4. The adapter (100) according to claim 3, wherein the adapter seat (22) is rotatably connected to the fixing seat (21) to adjust a position of the second conductive part (202);
and optionally, wherein a rotation angle of the adapter seat (22) is less than 360°;
and optionally, wherein the rotation angle of the adapter seat (22) ranges from 15° to 345°.

5. The adapter (100) according to claim 4, wherein the fixing seat (21) is provided with a first limiting portion (211) and a second limiting portion (212), and the adapter seat (22) is provided with a first stopping portion (221) and a second stopping portion (222);
the adapter seat (22) rotates between a first limit position and a second limit position; when the adapter seat (22) rotates to the first limit position, the first stopping portion (221) stops against the first limiting portion (211); and when the adapter seat (22) rotates to the second limit position, the second stopping portion (222) stops against the second limiting portion (212).

6. The adapter (100) according to claim 4 or 5, wherein the adapter (100) comprises an electrical connector (3), the second conductive part (202) is electrically connected to the first conductive part (102) through the electrical connector (3), and the electrical connector (3) comprises a bendable redundant segment (31) that expands or bends during rotation of the adapter seat (22);
and optionally, wherein a storage cavity (203) is provided inside the adapter head (2), and the redundant segment (31) is bendably disposed in the storage cavity (203).

7. The adapter (100) according to any one of claims 4-6, wherein the fixing seat (21) comprises a first abutting portion (213), the adapter seat (22) comprises a second abutting portion (223), the second abutting portion (223) abuts against the first abutting portion (213) along an axial direction of the connecting rod (1), and an elastic member (29) is provided between the second abutting portion (223) and the first abutting portion (213).

8. The adapter (100) according to any one of claims 3-7, wherein the connecting rod (1) is provided with a first insertion part (11), the fixing seat (21) is provided with a first insertion hole (215), and the first insertion part (11) is inserted into and fitted with the first insertion hole (215);
and optionally, wherein the first insertion hole (215) is a blind hole with an aperture facing the connecting rod (1), the fixing seat (21) is provided with a first avoidance opening (216), and the second conductive part (202) is electrically connected to the first conductive part (102) through the first avoidance opening (216).

9. The adapter (100) according to claim 7, wherein the fixing seat (21) is provided with a second insertion part (214), the adapter seat (22) is provided with a second insertion hole (224), and the second insertion part (214) is inserted into and fitted with the second insertion hole (224);
and optionally, wherein the second insertion hole (224) is a through-hole, and the fixing part (201) is disposed at the second insertion part (214).

10. The adapter (100) according to any one of claims 3-9, wherein the adapter head (2) further comprises a turning member (23) disposed on a side of the adapter seat (22) away from the connecting rod (1) in an axial direction of the connecting rod (1), and the turning member (23) is connected to the fixing seat (21) and provided with a turning part;
and optionally, wherein the adapter head (2) further comprises a clamping member (24) disposed on a side of the turning member (23) away from the connecting rod (1) in the axial direction of the connecting rod (1); the clamping member (24) is connected to the fixing seat (21); and the turning member (23) is clamped between the adapter seat (22) and the clamping member (24) in the axial direction of the connecting rod (1); and
and optionally, wherein the adapter head (2) further comprises a decorative cover (25) disposed on a side of the clamping member (24) away from the connecting rod (1) in the axial direction of the connecting rod (1), and the decorative cover (25) is connected to the turning member (23).

11. The adapter (100) according to any one of claims 3-10, wherein the connecting rod (1) is provided with a third conductive part (103) disposed inside the adapter (100), the third conductive part (103) is electrically connected to the first conductive part (102), and the second conductive part (202) is electrically connected to the third conductive part (103);
and optionally, wherein at least one of the first conductive part (102) and the third conductive part (103) is disposed on an outer circumferential side of the connecting rod (1).

12. The adapter (100) according to any one of claims 3-11, wherein the adapter seat (22) comprises an adapter shell (2201) and a circuit board (27), a receiving cavity (204) is enclosed between the fixing seat (21) and the adapter shell (2201), the circuit board (27) is disposed in the receiving cavity (204) and connected to the adapter shell (2201), and the second conductive part (202) is electrically connected to the first conductive part (102) through the circuit board (27).

13. The adapter (100) according to claim 12, wherein the adapter seat (22) further comprises a backplate (28) disposed in the receiving cavity (204), and the circuit board (27) is connected to the backplate (28);
and optionally, wherein the second conductive part (202) is electrically connected to the first conductive part (102) through an electrical connector (3) of the adapter (100), and the electrical connector (3) comprises a bendable redundant segment (31); the backplate (28) is on a side of the circuit board (27) away from the connecting rod (1), and the redundant segment (31) is on a side of the backplate (28) away from the circuit board (27);
and further optionally, wherein the circuit board (27) is provided with a second avoidance opening (271) for the electrical connector (3) to pass through, and the backplate (28) is provided with a third avoidance opening (281) for the electrical connector (3) to pass through; and/or a wire clamping portion is provided on the side of the backplate (28) away from the circuit board (27), and a part of the electrical connector (3) snaps to the wire clamping portion.

14. A center console, comprising:
a mounting bracket provided with an insertion hole and a fixed conductive part; and
the adapter (100) according to any one of claims 1-13, wherein the connecting rod (1) is inserted into the insertion hole, and the first conductive part (102) is electrically connected to the fixed conductive part.

15. A vehicle, comprising the adapter (100) according to any one of claims 1-13 or the center console according to claim 14.
